# EUROPÄISCHE PATENTSCHRIFT

(11) **EP 1 345 721 B1**
(45) Veröffentlichungstag und Bekanntmachung des Hinweises auf die Patenterteilung: **26.03.2008**
(21) Anmeldenummer: 01986938.7
(22) Anmeldetag: 27.12.2001
(51) Int. Cl.: B23B 31/02

(54) **WERKZEUGHALTER FÜR EIN UM EINE DREHACHSE DREHBARES WERKZEUG**
TOOL HOLDER FOR A TOOL THAT CAN ROTATE ABOUT AN AXIS OF ROTATION
PORTE-OUTIL POUR UN OUTIL POUVANT TOURNER AUTOUR D'UN AXE DE ROTATION

(30) Priorität: 27.12.2000 DE 10065383
(43) Veröffentlichungstag der Anmeldung: 24.09.2003
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Liska, Horst
(86) Internationale Anmeldenummer: PCT/EP2001/015325
(87) Internationale Veröffentlichungsnummer: WO 2002/051571

(56) Entgegenhaltungen:
- DE-A- 19 923 164
- DE-A- 19 926 152

## Beschreibung

Die Erfindung betrifft einen Werkzeughalter für ein um eine Drehachse drehbares Werkzeug, insbesondere ein Bohr-, Fräs- oder Reibwerkzeug.

Es ist bekannt, zum Beispiel aus US 5 311 654, den Halteschaft eines Bohr-, Fräs- oder Reibwerkzeugs in einer zu seiner Drehachse zentrischen Aufnahmeöffnung eines ringförmig geschlossenen Hülsenteils im Presssitz zu halten. Der Hülsenteil bildet das werkzeugseitige Ende eines mit einem herkömmlichen Anschluss an die rotierende Spindel der Werkzeugmaschine versehenen Spannschaft des Werkzeughalters und kann durch Erwärmen beispielsweise mittels magnetisch in dem Hülsenteil induzierter Wirbelströme auf eine das Einschieben oder Herausziehen des Halteschafts des Werkzeugs ermöglichende Weite radial aufgeweitet werden. Bei herausgezogenem Halteschaft ist der Innendurchmesser der Aufnahmeöffnung des Werkzeughalters bei der Arbeitstemperatur der Werkzeugmaschine etwas kleiner als der Außendurchmesser des Halteschafts des Werkzeugs, so dass nach dem Abkühlen des durch Erwärmen aufgeweiteten Hülsenteils auf die Arbeitstemperatur der Werkzeugmaschine der Halteschaft in den Hülsenteil eingeschrumpft ist. Die im Schrumpfsitz übertragenen Reibungskräfte sind hinreichend groß, um trotz fehlendem Formschluss das für den Bearbeitungsvorgang geforderte Drehmoment vom Werkzeughalter auf das Werkzeug übertragen zu können.

Beim Einsetzen des Halteschafts in den Werkzeughalter kann der Hülsenteil hinreichend erwärmt werden, bevor der Halteschaft der Wärmequelle ausgesetzt wird. Soll der Halteschaft jedoch wieder aus dem Hülsenteil herausgezogen werden, so muss das Hülsenteil so rasch erwärmt werden, dass sich der Bereich der Aufnahmeöffnung schneller aufweitet als der in diesem Fall gleichfalls der Wärmequelle ausgesetzte HaJteschaft des Werkzeugs. Zum Herausziehen des Halteschafts aus herkömmlichen Werkzeughaltern sind deshalb vielfach vergleichsweise große Zugkräfte erforderlich.

Es ist Aufgabe der Erfindung, einen den Halteschaft eines rotierenden Werkzeugs im Schrumpfsitz haltenden Werkzeughalter auf konstruktiv einfache Weise so zu verbessern, dass das Werkzeug problemlos aus dem Werkzeughalter wieder entnommen werden kann.

Die Erfindung ist durch die in Anspruch 1 angegebenen Merkmale gekennzeichnet.

Hierbei geht die Erfindung von einem Werkzeughalter für ein um eine Drehachse drehbares Werkzeug, insbesondere ein Bohr-, Fräs- oder Reibwerkzeug, aus, welches umfasst:

Einen Spannschaft, der an seinem werkzeugseitigen Ende einen ringförmig geschlossenen Hülsenteil mit einer zur Drehachse zentrischen Aufnahmeöffnung für einen Halteschaft des Werkzeugs aufweist, wobei die Aufnahmeöffnung durch Erwärmen des Hülsenteils, insbesondere mittels magnetisch in dem Hülsenteil induzierter Wirbelströme auf eine das Einschieben oder Herausziehen des Halteschafts des Werkzeugs ermöglichende Weite radial aufweitbar und durch Abkühlen auf eine den Halteschaft im Presssitz haltende Weite radial schrumpfbar ist.

Der Hülsenteil weist Wärmeisolationsmittel auf, die bei Erwärmung eines radial außen gelegenen Umfangsbereichs des Hülsenteils insbesondere mittels magnetisch in den Hülsenteil induzierter Wirbelströme das Wärmeleitvermögen eines radial innen gelegenen Umfangsbereichs des Hülsenteils verglichen mit dem radial außen gelegenen Umfangsbereich erniedrigen.

Durch die Wärmeisolationsmittel wird erreicht, dass sich der radial innen gelegene Umfangsbereich, also der der Spannfläche der Aufnahmeöffnung nächstgelegene Bereich des Hülsenteils weniger rasch erwärmt als der der äußeren Wärmequelle nähergelegene radial außen gelegene Umfangsbereich des Hülsenteils. Die Erwärmung des radial innen gelegenen Umfangsbereichs und damit des Halteschafts des Werkzeugs wird auf diese Weise verzögert. Da der radial innen gelegene Umfangsbereich und der radial außen gelegene Umfangsbereich fest miteinander verbunden sind, weiten die beim Aufweiten des radial außen gelegenen Umfangsbereichs entstehenden radialen Zugkräfte auch den radial innen gelegenen Umfangsbereich mit auf, so dass der Halteschaft des Werkzeugs sehr rasch und ohne sich selbst übermäßig zu erwärmen aus seinem Presssitz entlassen wird.

Der Hülsenteil wird bevorzugt mit Hilfe einer ihn umschließenden, von Wechselstrom durchflossenen Induktionsspule mittels magnetisch in dem Hülsenteil induzierter Wirbelströme erwärmt. Der Hülsenteil besteht aus Metall, also einem elektrisch leitenden Material, und ist bevorzugt auch magnetisch leitend, um den magnetischen Fluss der Induktionsspule auf sich zu konzentrieren. Im radial innen gelegenen Umfangsbereich des Hülsenteils sind mehrere den radialen Wärmeleitquerschnitt des Hülsenteils mindernde Aussparungen vorgesehen. Diese Aussparungen mindern nicht nur den Wärmeleitquerschnitt, sondern mindern auch den für den magnetischen Fluss der Induktionsspule zur Verfügung stehenden Querschnitt des magnetischen Kreises, mit der Folge, dass sich die den Hülsenteil erwärmenden Wirbelströme auf dessen radial äußeren Umfangsbereich konzentrieren.

Das von dem Hülsenteil auf den Halteschaft des Werkzeugs reibschlüssig übertragbare Drehmoment hängt von der in Anlagekontakt mit dem Halteschaft bringbaren Mantelfläche der Aufnahmeöffnung ab. Um eine möglichst große Mantelfläche der Aufnahmeöffnung sicherzustellen, sind die Aussparungen als vollständig im Material des Hülsenteils verlaufende Kanäle ausgebildet. Der die Aufnahmeöffnung für den Halteschaft des Werkzeugs bildenden radial innen gelegene Umfangsbereich des Hülsenteils ist in diesem Fall durch zwischen den. Kanälen gelegene Materialstege mit dem radial außen gelegenen Umfangsbereich einteilig und materialeinheitlich, d.h. fest verbunden. Die Kanäle verlaufen im Wesentlichen parallel zur Drehachse.

Zur thermischen Isolation können die Aussparungen bzw. Kanäle- Luft enthalten; sie können aber auch mit einem thermisch isolierenden Feststoffmaterial ausgefüllt sein.

Bei dem erfindungsgemäßen Werkzeughalter ist der radial innen gelegene Umfangsbereich des Hülsenteils fest mit dem radial außen gelegenen Hülsenteil verbunden, so dass der radial außen gelegene Hülsenteil bei der Wärmeaufweitung radiale Zugkräfte auf den radial innen gelegenen Hülsenteil ausüben kann.

Im Folgenden werden bevorzugte Ausführungsbeispiele der Erfindung anhand einer Zeichnung näher erläutert. Hierbei zeigt:
- Figur 1: einen Axiallängsschnitt durch einen erfindungsgemäßen Werkzeughalter, von dem die Erfindung ausgeht;
- Figuren 2 und 3: Axialquerschnitte durch den Hülsenteil erfindungsgemäßen Werkzeughalter.

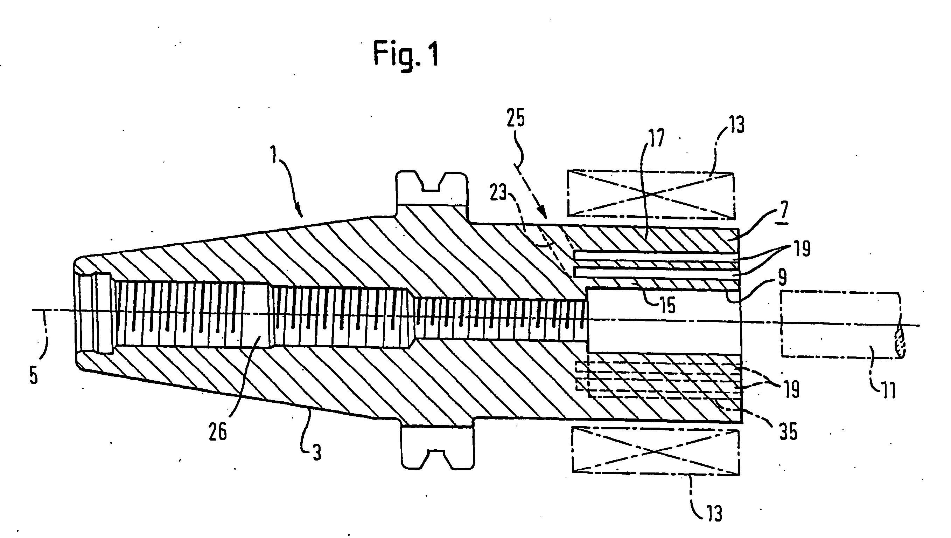

An Hand von Fig. 1 soll zunächst der grundsätzliche Aufbau eines Werkzeughalters erläutert werden, von dem die Erfindung ausgeht.

Der in Figur 1 dargestellte Werkzeug halter hat einen hier einstückigen, gegebenenfalls aber auch mehrstückig zusammengesetzten Spannschaft 1, der an seinem einen Ende eine herkömmliche Spindelkupplung 3, hier in Form eines Normkegels hat, mit der er drehfest und gleichachsig zu seiner Drehachse 5 in eine entsprechende Aufnahme einer rotierenden Arbeitsspindel einer Werkzeugmaschine einsetzbar ist. An seinem der Arbeitsspindel axial abgewandten Ende hat der Spannschaft 1 ein zur Drehachse 5 zentrisches, ringförmig geschlossenes, materialeinheitlich aus einem ferromagnetischen Metall, beispielsweise Stahl, bestehendes Hülsenteil 7, welches eine zur Drehachse 5 zentrische, hier im Wesentlichen zylindrische Aufnahmeöffnung 9 für einen bei 11 angedeuteten Halteschaft eines rotierenden Werkzeugs, beispielsweise eines Bohrers, Fräsers oder eines Reibwerkzeugs enthält. Der Nenn-Innendurchmesser der zylindrischen Aufnahmeöffnung 9 ist etwas kleiner als der Nenn-Außendurchmesser des Halteschafts 11, so dass der Hülsenteil 7 in der Lage ist, den in die Aufnahmeöffnung 9 eingesetzten Halteschaft 11 im Presssitz bzw. Schrumpfsitz ohne zusätzliche Formschlusselemente drehmomentübertragend zu halten.

Der an seinem Außenumfang im dargestellten Ausführungsbeispiel zylindrische, gegebenenfalls aber auch zum Werkzeug hin konisch sich verjüngende Hülsenteil 7 kann mittels einer den Hülsenteil 7 außen umschlie-ßenden, bei 13 angedeuteten, Wechselstrom-durchflossenen Induktionsspule auf induktivem Weg erwärmt werden. Die Induktionsspule erstreckt sich über den größten Teil der axialen Länge des Hülsenteils und induziert in dem elektrisch und magnetisch leitenden Material des Hülsenteils 7 Wirbelströme, die neben den magnetischen Verlusten der magnetischen Hysterese des Hülsenteilmaterials den Hülsenteil elektrisch erwärmen. Durch die Erwärmung weitet sich der Hülsenteil und damit die Aufnahmeöffnung radial auf, mit der Folge, dass der Halteschaft 11 im erwärmten Zustand des Hülsenteils 7 in die Aufnahmeöffnung 9 eingesteckt oder aus dieser herausgezogen werden kann. Wird der Hülsenteil 7 bei eingestecktem Halteschaft 11 auf die Arbeitstemperatur der Werkzeugmaschine, beispielsweise Umgebungstemperatur, abgekühlt, so schrumpft der Hülsenteil 7 im Presssitz auf den Halteschaft 11 auf.

Die Konstruktion der Induktionsspule 13 und des für ihren Betrieb erforderlichen Wechselstromgenerators ist an sich bekannt und soll nicht weiter erläutert werden. Da die Induktionswirkung der Induktionsspule 13 mit wachsender Frequenz sich erhöht, wird höherfrequenter Wechselstrom für das Speisen der Induktionsspule bevorzugt.

Der Halteschaft 11 des Werkzeugs besteht ähnlich dem Hülsenteil 7 zumeist aus einem sowohl elektrisch als auch magnetisch leitendem Metall, wie zum Beispiel Stahl, und würde durch induzierte Wirbelströme gleichfalls erwärmt werden. Während beim Einsetzen des Halteschafts 11 der Hülsenteil 7 induktiv erwärmt werden kann, bevor der Halteschaft 11 dem Magnetfeld hinreichend angenähert wird, muss beim Entnehmen des Werkzeugs sichergestellt werden, dass sich der Hülsenteil 7 rascher aufweitet als der gleichfalls der Erwärmung ausgesetzte Halteschaft 11. Um die Erwärmung eines der Aufnahmeöffnung 9 benachbarten, radial innen gelegenen Umfangsbereichs 15 des Hülsenteils 7 gegenüber der Erwärmung eines radial außen gelegenen Umfangsbereichs 17 des Hülsenteils 7 zu verzögern, enthält der Hülsenteil 7 nahe der Aufnahmeöffnung 9 eine Vielzahl parallel zur Drehachse 5 verlaufender Kanäle 19, die den Wärmeleiterquerschnitt des Hülsenteils 7 radial mindern und so den radial innen gelegenen Umfangsbereich 15 vom radial außen gelegenen Umfangsbereich 17 thermisch isolieren. Die Kanäle 19 enthalten Luft, können aber auch mit einem anderen thermisch isolierenden Material, wie zum Beispiel Feststoffisolationsmaterial, etwa temperaturebeständigem Kunststoff, gefüllt sein. Zwischen den Kanälen 19 verbleiben stegartige Materialbereiche 21, die den radial innen gelegenen Umfangsbereich 15 integral mit dem radial außen gelegenen Umfangsbereich 17 fest verbinden. Wird der Umfangsbereich 17 thermisch aufgeweitet, so übertragen die Materialstege 21 radiale Zugspannungen auf den innen gelegenen Umfangsbereich 15. Auf Grund der verzögerten Erwärmung des innen gelegenen Umfangsbereichs 15 kann der außen gelegene Umfangsbereich 17 stärker erwärmt werden als bisher, mit der Folge, dass der Hülsenteil 7 auf einen größeren lichten Durchmesser als bisher aufgeweitet werden kann, ohne dass der Halteschaft 11 des Werkzeugs mit gleicher Änderungsrate folgt. Auch erfolgt in diesem Fall die Aufweitung rascher als bisher.

Die Kanäle 19 können als allseitig geschlossene Kammern ausgebildet sein, sind aber zweckmäßigerweise zumindest an einem ihrer beiden Enden, hier dem werkzeugseitigen Ende offen, um eine kühlende Konvektionsströmung zu ermöglichen. Bevorzugt sind beide Enden der Kanäle 19 direkt oder indirekt zur Umgebung des Werkzeughalters hin geöffnet und erlauben eine Durchströmung des Hülsenteils 7 mit einem Kühlmittel. Bei dem Werkzeughalter der Figur 1 ist das werkzeugferne Ende der Kanäle 19 einzeln, in Gruppen oder für sämtliche Kanäle gemeinsam mit wenigstens einem weiteren Kanal 23 verbunden, der, wie durch einen Pfeil 25 angedeutet, eine zwangsweise Durchströmung des Hülsenteils 7 zumindest während der induktiven Aufwärmphase des Werkzeugausschrumpfvorgangs ermöglicht. Über den Kanal 23 kann beispielsweise von einem Kühlluftgebläse Kühlluft durch die Kanäle 19 geblasen werden. Es versteht sich, dass zur Kühlung des Hülsenteils 7 auch eine Kühlflüssigkeit, beispielsweise Kühlwasser, verwendet werden kann, das gegebenenfalls in einem geschlossenen Kühlwasserkreislauf durch die Kanäle 19 gepumpt wird. Figur 1 zeigt die Kühlmittelströmung zur Werkzeügseite des Werkzeughalters hin. Die Strömungsrichtung kann selbstverständlich umgekehrt verlaufen. Auch können die Kanäle 19 nicht mit dem Außenumfang des Spannschafts 1 verbunden sein, sondern mit einer in aller Regel in dem Spannschaft 1 ohnehin vorhandenen, bis in die Aufnahmeöffnung 9 reichenden zentralen Bohrung 26 des Spannschafts 1.

Bei dem Werkzeughalter der Figur 1 sind die Kanäle 19 als kreiszylindrische Bohrungen ausgeführt. Im Folgenden werden erfindungsgemäße Varianten achsnormaler Querschnittsformen der Kanäle erläutert. Gleichwirkende Komponenten sind mit den Bezugszahlen der Figur 1 bezeichnet und zur Unterscheidung mit einem Buchstaben versehen. Zur Erläuterung des Aufbaus und der Wirkungsweise wird jeweils auf die gesamte Beschreibung Bezug genommen.

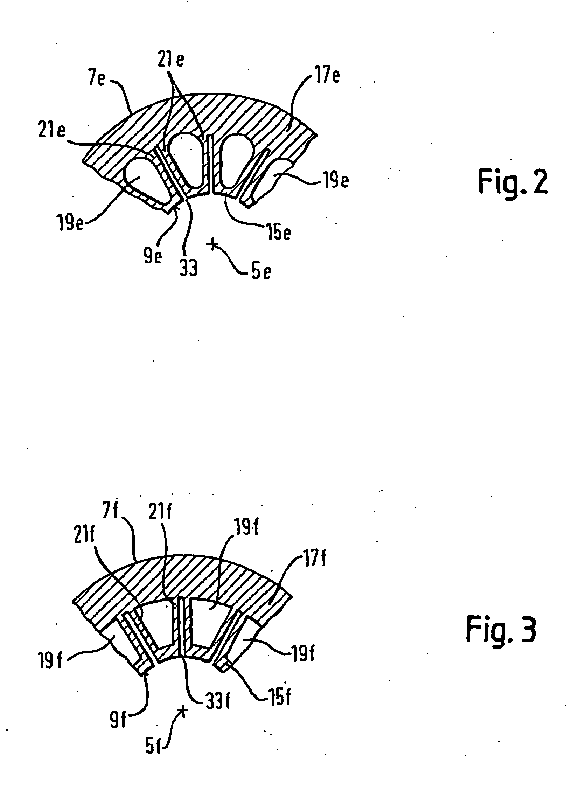

Die Kanäle 19 könnten als in radialer Richtung langgestreckte Schlitzstrukturen ausgebildet sein, deren Breite in Umfangsrichtung kleiner ist als deren Länge in Radialrichtung, wobei die Kanäle 19 über ihre radiale Höhe hinweg etwa gleichbleibende Breite haben. Die zwischen den Kanälen 19 verbleibenden Stege 21 sind dementsprechend radial außen breiter als radial innen mit der Folge, dass der Wärmeleitquerschnitt erst allmählich zum radial innen gelegenen Umfangsbereich 15 in abnimmt. Figur 2 zeigt den Axialquerschnitt durch den Hülsenteil 7e einer erfindungsgemäßen Werkzeughalters, bei welchem die Kanäle 19e im Umfangsbereich 17e benachbart in Umfangsrichtung breiter sind als auf ihrer dem Umfangsbereich 15e zugewandten Seite. Die Stege 21 e haben auf ihrer radialen Höhe dementsprechend im Wesentlichen gleichbleibende Umfangsbreite und haben zur Minderung ihres Wärmeleitquerschnittes zusätzlich einen von der Aufnahmeöffnung 9e zwischen benachbarten Kanälen 19e radial sich hineinerstreckenden Schlitz 33. Der Schlitz 33 erstreckt sich in einer Radialebene parallel zur Drehachse 5e. Der Innenmantel der Aufnahmeöffnung 9e wird auf diese Weise mehrfach segmentiert.

Figur 3 zeigt eine Variante, die sich von der Ausführungsform der Figur 2 lediglich, durch die Axialquerschnittsform der Kanäle 1 9f unterscheidet. Während die Kanäle 19e in Figur 2 im Axialquerschnitt kreisbogenförmig gerundete Längsränder zu den Umfangsbereichen 17e und 1 5e hin haben, verlaufen diese Längsränder in der Variante der Figur 3 auf Durchmesserkreisen um die Drehachse 5f. Die Kanäle 19f haben dementsprechend angenähert Trapezform.

Bei den vorstehend erläuterten Auführungsformen ist der radial außen liegende Umfangsbereich 17e bzw. 17f Hülsenteils 7e bzw. 7f über Materialstege zugkraftfest mit dem radial inneren Bereich 15e bzw. 15f verbunden.

## Patentansprüche

1. Werkzeughalter für ein um eine Drehachse drehbares Werkzeug, insbesondere ein Bohr-, Fräs- oder Reibwerkzeug, umfassend:
einen Spannschaft (1), der an seinem werkzeugseitigen Ende einen ringförmig geschlossenen Hülsenteil (7) mit einer zur Drehachse (5) zentrischen Aufnahmeöffnung (9) für einen Halteschaft (11) des Werkzeugs aufweist,
wobei die Aufnahmeöffnung (9) durch Erwärmen des Hülsenteils (7), insbesondere mittels magnetisch in dem Hülsenteil induzierter Wirbelströme auf eine das Einschieben oder Herausziehen des Halteschafts (11) des Werkzeugs ermöglichende Weite radial aufweitbar und durch Abkühlen auf eine den Halteschaft (11) im Presssitz haltende Weite radial schrumpfbar ist,
wobei der Hülsenteil (7) Wärmeisolationsmittel (19) aufweist, die bei Erwärmung eines radial außen gelegenen Umfangsbereichs (17) des Hülsenteils (7) das Wärmeleitvermögen eines radial innen gelegenen Umfangsbereichs (15) des Hülsenteils (7) verglichen mit dem radial außen gelegenen Umfangsbereich (17) erniedrigen,
**dadurch gekennzeichnet, dass** im radial innen gelegenen Umfangsbereich (15) des Hülsenteils (7) mehrere den radialen Wärmeleitquerschnitt des Hülsenteils (7) mindernde Aussparungen (19) vorgesehen sind,
dass der die innere Umfangsmantelfläche der Aufnahmeöffnung (9) bildende, radial innen gelegene Umfangsbereich (15) des Hülsenteils (7) und der radial außen gelegene Umfangsbereich (17) einteilig miteinander verbunden sind und aus einheitlichem Material bestehen, dass die Aussparungen als vollständig im Material des Hülsenteils (7) im Wesentlichen parallel zur Drehachse (5) verlaufende Kanäle (19) ausgebildet sind und
dass in Umfangsrichtung zwischen benachbarten Kanälen verbleibende Materialstege (21) einen von der Aufnahmeöffnung (9) für den Halteschaft (1) zwischen die benachbarten Kanäle radial sich hinein erstreckenden Schlitz (33) enthalten.

2. Werkzeughalter nach Anspruch 1, **dadurch gekennzeichnet, dass** die Kanäle dem radial äußeren Umfangsbereich benachbart in Umfangsrichtung breiter sind als auf ihrer dem radial inneren Umfangsbereich zugewandten Seite.

3. Werkzeughalter nach Anspruch 2, **dadurch gekennzeichnet, dass** die Stege über ihre radiale Höhe hinweg im Wesentlichen gleichbleibende Umfangsbreite haben.

4. Werkzeughalter nach einem der Ansprüche 1 bis 3, **dadurch gekennzeichnet, dass** die Kanäle (19) Luft oder ein wärmeisolierendes Feststoffmaterial enthalten.

## Claims

1. Tool holder for a tool that can rotate about an axis of rotation, in particular a drilling, milling or reaming tool, comprising: a clamping shank (1) which, at its tool-side end, has a bush part (7) closed in an annular manner and having a mounting opening (9), concentric to the axis of rotation (5), for a fixing shank (11) of the tool, the mounting opening (9), by heating the bush part (7), in particular by means of eddy currents magnetically induced in the bush part, being radially expandable to a width enabling the fixing shank (11) of the tool to be pushed in or pulled out and being radially shrinkable, by cooling, to a width holding the fixing shank (11) in an interference fit, the bush part (7) having heat-insulating means (19) which, during heating of a radially outer circumferential region (17) of the bush part (7), reduce the thermal conductivity of a radially inner circumferential region (15) of the bush part (7) compared with the radially outer circumferential region (17), **characterized in that** a plurality of apertures (19) reducing the radial heat-conducting cross section of the bush part (7) are provided in the radially inner circumferential region (15) of the bush part (7), **in that** the radially inner circumferential region (15), forming the inner circumferential lateral surface of the mounting opening (9), of the bush part (7) and the radially outer circumferential region (17) are connected to one another in one piece and are made of a homogeneous material, **in that** the apertures are designed as passages (19) running entirely in the material of the bush part (7), essentially parallel to the axis of rotation (5), and **in that** material webs (21) remaining in the circumferential direction between adjacent passages contain a slot (33) extending radially from the mounting opening (9) for the fixing shank (11) in between the adjacent passages.

2. Tool holder according to Claim 1, **characterized in that** the passages are wider in the circumferential direction adjacent to the radially outer circumferential region than on their side facing the radially inner circumferential region.

3. Tool holder according to Claim 2, **characterized in that** the webs have an essentially uniform circumferential width over their radial height.

4. Tool holder according to one of Claims 1 to 3, **characterized in that** the passages (19) contain air or a heat-insulating solid material.

## Revendications

1. Porte-outil pour un outil en rotation autour d'un axe de rotation, en particulier un outil de perçage, de fraisage ou de meulage, comprenant : un arbre de serrage (1) qui présente à son extrémité côté outil une partie en douille (7) fermée de forme annulaire avec une ouverture de réception (9) centrée par rapport à l'axe de rotation (5) pour une tige de maintien (11) de l'outil,
dans lequel l'ouverture de réception (9) est susceptible d'être élargie radialement par échauffement de la partie en douille (7), en particulier au moyen de courants de Foucault induits par voie magnétique dans la partie en douille, à une largeur permettant l'introduction ou l'extraction de la tige de maintien (11) de l'outil, et d'être rétrécie radialement par refroidissement à une largeur permettant le maintien de la tige de maintien (11) par un ajustement serré,
dans lequel la partie en douille (7) comporte des moyens d'isolation thermique (19) qui, lors de l'échauffement d'une zone périphérique (17), située radialement à l'extérieur, de la partie en douille (7) abaissent la conductibilité thermique d'une zone périphérique (15), située radialement à l'intérieur, de la partie en douille (7) par comparaison avec la zone périphérique (17) située radialement à l'extérieur,
**caractérisé en ce que** plusieurs évidements (19) qui réduisent la section radiale de conduction thermique de la partie en douille (7) sont prévus dans la zone périphérique (15), située radialement à l'intérieur, de la partie en douille (7),
**en ce que** la zone périphérique (15), située radialement à l'intérieur, de la partie en douille (7) formant la surface enveloppe périphérique intérieure de l'ouverture de réception (9), et la zone périphérique (17) située radialement à l'extérieur sont reliées l'une à l'autre d'une seule pièce et sont constituées d'un matériau unitaire,
**en ce que** les évidements sont réalisés sous forme de canaux (19) ménagés complètement dans le matériau de la partie en douille (7) et s'étendant sensiblement parallèlement à l'axe de rotation (5), et
**en ce que** des barrettes de matériau (21) qui restent en direction périphérique entre des canaux voisins contiennent une fente (33) qui s'étend depuis l'ouverture de réception (9) pour la tige de maintien (1) en pénétrant radialement entre les canaux voisins.

2. Porte-outil selon la revendication 1, **caractérisé en ce que** les canaux voisins de la zone périphérique radialement extérieure sont plus larges en direction périphérique que de leur côté tourné vers la zone périphérique radialement intérieure.

3. Porte-outil selon la revendication 2, **caractérisé en ce que** les barrettes ont sur leur hauteur radiale une largeur périphérique sensiblement égale.

4. Porte-outil selon l'une des revendications 1 à 3, **caractérisé en ce que** les canaux (19) contiennent de l'air ou un matériau solide assurant une isolation thermique.
